(19) **Europäisches Patentamt / European Patent Office / Office européen des brevets**

(11) **EP 1 297 710 B1**

(12) **FASCICULE DE BREVET EUROPEEN**

(45) Date de publication et mention de la délivrance du brevet:
**28.03.2007 Bulletin 2007/13**

(21) Numéro de dépôt: **01981928.3**

(22) Date de dépôt: **16.05.2001**

(51) Int Cl.:
*H04N 7/26* (2006.01)   *H04N 7/50* (2006.01)

(86) Numéro de dépôt international:
**PCT/EP2001/005564**

(87) Numéro de publication internationale:
**WO 2001/093593 (06.12.2001 Gazette 2001/49)**

(54) **DISPOSITIF ET PROCEDE DE CODAGE VIDEO AVEC FILTRAGE RECURSIF COMPENSE EN MOUVEMENT**

VERFAHREN UND VORRICHTUNG FÜR VIDEOKODIERUNG MIT REKURSIVER BEWEGUNGSKOMPENSIERTER FILTERUNG

DEVICE AND METHOD FOR MOTION-COMPENSATED RECURSIVE FILTERING OF VIDEO IMAGES PRIOR TO CODING AND CORRESPONDING CODING SYSTEM

(84) Etats contractants désignés:
**AT BE CH CY DE DK ES FI FR GB GR IE IT LI LU MC NL PT SE TR**

(30) Priorité: **31.05.2000 EP 00401558**
**24.07.2000 FR 0009684**

(43) Date de publication de la demande:
**02.04.2003 Bulletin 2003/14**

(73) Titulaire: **Thomson Licensing**
**92100 Boulogne-Billancourt (FR)**

(72) Inventeurs:
• **LE MEUR, Olivier**
  **35160 Talensac (FR)**
• **BABONNEAU, Jean-Yves**
  **35590 L'Hermitage (FR)**
• **MORONTA, Juan**
  **35190 Saint Thual (FR)**
• **TOUCHAIS, Dominique**
  **35340 La Bouexière (FR)**

(74) Mandataire: **Ruellan-Lemonnier, Brigitte et al**
**Thomson**
**46, quai A. Le Gallo**
**92648 Boulogne Cedex (FR)**

(56) Documents cités:
**EP-A- 0 535 684**      **EP-A- 0 735 747**
**EP-A- 0 957 367**      **WO-A-97/30545**
**US-A- 5 832 234**

• **RUIZ V ET AL: "An 8*8-block based motion estimation using Kalman filter" PROCEEDINGS. INTERNATIONAL CONFERENCE ON IMAGE PROCESSING (CAT. NO.97CB36144), PROCEEDINGS OF INTERNATIONAL CONFERENCE ON IMAGE PROCESSING, SANTA BARBARA, CA, USA, 26-29 OCT. 1997, pages 140-143 vol.2, XP002168404 1997, Los Alamitos, CA, USA, IEEE Comput. Soc, USA ISBN: 0-8186-8183-7**

**Description**

La présente invention est relative à un dispositif et à un procédé de filtrage récursif compensé en mouvement, ainsi qu'à un système de codage correspondant.

Elle concerne les techniques de réduction de bruit appliquées à des signaux vidéo numériques. Ces techniques s'appliquent généralement à des images vidéo numériques se présentant sous la forme d'une matrice d'échantillons ; chaque échantillon est composé d'un signal de luminance et, pour un signal en couleur, d'un signal de chrominance.

L'acquisition des séquences d'images vidéo est encore aujourd'hui largement réalisée sous une forme analogique de sorte que les images, une fois acquises et éventuellement transmises et stockées dans des formats analogiques, présentent une part sensible de bruit dans leur contenu. Une fois numérisées, ces images sont également souvent soumises à des opérations de stockage / édition qui, à leur tour, introduisent un bruit de nature numérique, cette fois. En final, une séquence d'images subit généralement une succession de transformations ayant pour résultat un bruit spatio-temporel de nature fortement aléatoire.

Pour obtenir un fonctionnement performant, les méthodes de réduction de bruit faisant appel à un filtrage récursif considèrent la très forte corrélation temporelle des images d'une séquence vidéo. Par conséquent, les notions de mouvement et de déplacement sont importantes pour la mise au point d'une réduction de bruit efficace.

Par « déplacement », on entend le changement de position d'un objet dans une scène, ce changement de position étant localisé et propre à cet objet. Par « mouvement », on entend l'ensemble des déplacements d'objets dans une séquence vidéo.

Le mouvement est classiquement détecté soit par simple différence d'images à images, soit en utilisant un estimateur de mouvement. Dans le premier cas, on a recours à des différences d'images ou FDs (Frame Differences), pixels à pixels, à des instants distincts.

Dans le second cas (utilisation d'un estimateur de mouvement), on tient compte des déplacements en effectuant des différences d'images à des instants distincts. Ces déplacements sont représentés par des champs de vecteurs de mouvement appliqués à des pixels (estimation de mouvement au pixel) ou à des blocs (estimation de mouvement par blocs). On obtient ainsi des différences d'images compensées en mouvement, appelées DFDs (Displacement Frame Differences), par pixels ou par blocs. La seconde méthode donne des résultats bien meilleurs que la première, au prix d'une complexité plus grande.

Selon des techniques connues de réduction de bruit par filtrage récursif compensé en mouvement, par exemple décrites dans le document WO 9 730 545, on effectue une pondération d'un signal d'entrée courant *u* et d'un signal prédictif *v*, obtenu au moyen d'un signal d'entrée antérieur compensé en mouvement puis filtré. Le signal pondéré ainsi obtenu est produit en sortie comme le signal filtré et est enregistré pour les instants ultérieurs. Le coefficient de pondération du signal d'entrée courant *u* et le coefficient de pondération du signal prédictif *v* reposent sur le calcul d'un coefficient de récursivité α.

Dans des systèmes performants, ce coefficient est calculé à partir d'une estimation de bruit et de l'erreur de prédiction courante, égale à la différence entre le signal courant *u* et le signal prédictif *v*.

Au tel sujet, le document EP-A-0957367 (alinéa [0009]) spécifie que les performances de beacoup d'algorithmes pour l'élaboration des images, par exemple pour l'estimation de mouvement ou pour la réduction du bruit, sont ameliorés avec une estimation précise du niveau de bruit, car les paramètres et les seuils des algorithmes peuvent être adaptés audit niveau.

Généralement, la détermination du coefficient de récursivité α repose sur une estimation du niveau de bruit, souvent obtenue à partir des informations de DFDs issues d'un estimateur de mouvement. En effet, les DFDs sont assez bien représentatives de la quantité de bruit contenue dans une séquence vidéo. Les DFDs en donnent même une expression exacte si la compensation de mouvement est idéale (c'est-à-dire si la compensation est parfaite, quelles que soient la nature du mouvement et les déformations).

Ces techniques procurent des avantages significatifs : la réduction de bruit s'applique sur la totalité de l'image, l'estimation du niveau de bruit s'effectue sur toute l'image et les risques de confusion entre le bruit et le signal utile sont minimisés. Cependant, l'estimation du niveau de bruit réel est biaisée du fait que l'estimateur de mouvement n'est pas idéal. En effet, la précision de l'estimateur est limitée par un certain nombre de facteurs issus d'une part de contraintes d'implémentation (précision de codage des vecteurs de mouvements, excursion maximale de ces vecteurs ...) et d'autre part de contraintes intrinsèques aux estimateurs de mouvement (par exemple difficultés d'estimer de manière fiable des mouvements rotationnels ou provenant d'une homothétie). Par ailleurs, l'utilisation d'un algorithme d'estimation de mouvement fondé sur la notion de blocs de pixels (communément appelé « Block Matching ») accentue certains de ces défauts. Ce manque de précision, dépendant également de la source et de sa qualité (bruitée ou non), engendre une surestimation (par le biais d'une augmentation des DFDs) du niveau de bruit réel. Par conséquent, le filtrage est trop sévère provoquant un effet de flou. Enfin, en présence de bruit et sur des zones statiques, la sensibilité de l'estimateur de mouvement au bruit peut provoquer un manque d'homogénéité du champ de vecteurs engendrant une réelle distorsion de filtrage de ces zones. Cette dégradation, qui se manifeste par un effet de grouillement et de papillotement temporel, est gênante et difficilement acceptable.

La présente invention concerne un dispositif de filtrage récursif compensé en mouvement fondé sur une estimation de mouvements par blocs, qui permet d'obtenir une bonne qualité d'image, en réduisant considérablement les effets négatifs exposés ci-dessus.

L'invention est également relative à un système de codage comprenant un tel dispositif et à un procédé de filtrage récursif compensé en mouvement correspondant.

A cet effet, l'invention a trait à un dispositif de filtrage récursif compensé en mouvement d'images vidéo avant codage. Ce dispositif comprend :

- des moyens de stockage d'au moins une image d'entrée,
- un module d'estimation de mouvement par blocs, prévu pour produire par blocs des vecteurs de mouvement et des grandeurs représentatives de variations d'images compensées en mouvement, à partir d'une image d'entrée courante et d'au moins une image d'entrée stockée antérieurement dans les moyens de stockage,
- des moyens de détermination d'un niveau de bruit de récursivité en fonction d'au moins les grandeurs représentatives de variations d'images compensées en mouvement,
- un module de calcul d'une erreur de prédiction, entre une image d'entrée courante et une image prédite antérieurement par filtrage et compensation de mouvement,
- un module de calcul d'un coefficient de récursivité en fonction du niveau de bruit de récursivité et de l'erreur de prédiction,
- des moyens de calcul d'une image compensée en mouvement à partir d'une image filtrée et des vecteurs de mouvement,
- des moyens de filtrage, destinés à produire une pondération de l'image d'entrée courante et d'une image filtrée et compensée en mouvement stockée antérieurement, par le coefficient de récursivité, et
- des moyens de stockage d'au moins une image filtrée et compensée en mouvement.

Selon l'invention, le dispositif de filtrage comprend :

- des moyens de détermination d'un niveau de bruit d'immobilité en fonction d'au moins les grandeurs représentatives de variations d'images compensées en mouvement, et
- un ensemble de traitement de zones constituant des partitions des blocs employés pour l'estimation de mouvement, comprenant :

  • des moyens de calcul dans ces zones, de grandeurs représentatives de variations d'images conservées en espace, à partir d'une image d'entrée courante et d'au moins une image d'entrée stockée antérieurement dans les moyens de stockage d'images d'entrée, et
  • des moyens de mise à zéro des vecteurs de mouvement associés à ces zones lorsque les grandeurs représentatives de variations d'images conservées en espace sont inférieures à un seuil fonction du niveau de bruit d'immobilité.

Par «grandeurs représentatives de variations d'images compensées en mouvement », on entend des grandeurs qui quantifient des modifications temporelles dans une séquence d'images (préférentiellement par blocs) en tenant compte de l'estimation de mouvement. Ces grandeurs consistent avantageusement en les DFDs. Par « grandeurs représentatives de variations d'images conservées en espace », on entend en revanche des grandeurs qui quantifient des modifications dans une séquence d'images (préférentiellement par blocs) sans compensation de mouvement. Elles consistent avantageusement en les FDs.

Le dispositif de l'invention repose donc sur un couplage entre un filtrage en mouvement par blocs et un filtrage statique appliqué sur des zones formant des partitions de ces blocs. On met ainsi en oeuvre le filtrage statique avec une granularité plus fine qu'un traitement en blocs simples. Ce dispositif permet d'améliorer la qualité du signal vidéo en distinguant, dans chaque bloc traité, des zones statiques et des zones en mouvement.

Avantageusement, l'ensemble de traitement de zones utilise des zones constituées de sous-blocs des blocs employés pour l'estimation de mouvement.

L'utilisation d'une estimation de mouvement par blocs (du type Block Matching) présente en outre les avantages d'une solution hautement intégrée et éprouvée. Par exemple, pour la norme de compression vidéo MPEG2, l'estimation de mouvement est une estimation de mouvement travaillant avec des blocs de tailles 16x8 pixels.

Les moyens de calcul d'images compensées en mouvement utilisent les images filtrées (qui sont les images de sortie) et les vecteurs de mouvement, après traitement préalable de ces derniers par l'ensemble de traitement de zones.

Les deux niveaux de bruit utilisés dans le dispositif de l'invention ont essentiellement les fonctions suivantes :

- le niveau de bruit de récursivité ($\sigma_{rec}$) est destiné au calcul du coefficient de récursivité du filtre récursif, et
- le niveau de bruit d'immobilité ($\sigma_{imm}$) est destiné à la détection de zones statiques du filtrage statique ; il permet de détecter, par l'intermédiaire d'un seuil fonction de ce niveau de bruit d'immobilité, des zones d'images spatialement identiques (au seuil près) pour des instants temporels différents.

Le seuil fonction du niveau de bruit d'immobilité $\sigma_{imm}$ est avantageusement égal à (MAX désignant le maximum) :

$$\text{MAX} (k \times \sigma_{imm} ; S0),$$

où k est un coefficient multiplicateur et S0 représente un plancher pour le seuil. Ainsi, on force le niveau de seuil à une valeur basse lorsque ce seuil devient trop faible, de manière à pouvoir détecter des zones fixes même en présence de peu de bruit. Le coefficient k est préférentiellement compris entre 1 et 2, et vaut 1,5 dans une forme avantageuse de réalisation.

Dans d'autres modes de détermination du seuil, ce dernier est une fonction linéaire du niveau de bruit d'immobilité $\sigma_{imm}$, et dans une réalisation particulière, lui est égal.

Dans un premier mode de réalisation portant sur la détermination des niveaux de bruit, les moyens de détermination du niveau de bruit de récursivité et du niveau de bruit d'immobilité sont destinés à produire un niveau de bruit constituant à la fois le niveau de bruit de récursivité et le niveau de bruit d'immobilité. Les deux niveaux de bruits sont ainsi identiques pour le calcul du coefficient de récursivité et pour le filtrage statique. Il est alors préférable d'éviter de faire intervenir les grandeurs représentatives de variations d'images conservées en espace dans cette détermination. En effet, on évite ainsi un effet pervers de contre-réaction de la détection de zones statiques sur l'estimation du niveau de bruit.

Dans d'autres modes de réalisation, les niveaux de bruit de récursivité et d'immobilité diffèrent. Le premier est alors préférentiellement supérieur au second.

Ainsi, dans un second mode de réalisation, les moyens de détermination du niveau de bruit de récursivité sont prévus pour déterminer le niveau de bruit de récursivité à la fois en fonction des grandeurs représentatives de variations d'images compensées en mouvement et des grandeurs représentatives de variations d'images conservées en espace. Il est ainsi avantageux de déterminer le niveau de bruit de récursivité par une combinaison des DFDs et des FDs, le niveau de bruit d'immobilité dépendant de préférence uniquement des DFDs. Une telle technique de détermination du niveau de bruit de récursivité est par exemple exposée dans le brevet EP-957367. Une autre mise en oeuvre avantageuse d'une telle combinaison consiste à déterminer le niveau de bruit de récursivité en utilisant directement les FDs calculées pour les zones de traitement statique des blocs, au lieu de considérer leur moyenne sur l'ensemble des blocs de la trame.

Préférentiellement, les moyens de détermination des niveaux de bruit de récursivité et/ou d'immobilité sont prévus pour déterminer l'un des niveaux de bruit, ou les deux, au moyen d'une pondération des grandeurs représentatives de variations d'images compensées en mouvement, en fonction des vecteurs de mouvement, cette pondération étant éventuellement combinée avec d'autres moyens.

Les moyens de détermination des niveaux de bruit de récursivité et/ou d'immobilité sont pour cela avantageusement prévus pour répartir les grandeurs représentatives de variations d'images compensées en mouvement dans des classes ; ces classes sont associées respectivement à des plages délimitées par des normes des vecteurs de mouvement, rangées par valeurs croissantes, et à des coefficients de pondération correspondants.

Chacun des coefficients de pondération est préférentiellement appliqué à un cumul de ces grandeurs, c'est-à-dire à la somme partielle de la classe considérée. Les niveaux de bruit de récursivité et/ou d'immobilité sont alors donnés par la somme des cumuls, pondérés par les coefficients de pondération associés.

Cette réalisation offre encore une amélioration sensible de l'estimation du niveau de bruit, par une classification des grandeurs représentatives de variations d'images compensées en mouvement (préférentiellement des DFDs) sous forme d'un histogramme. La robustesse de l'estimation de bruit s'en trouve améliorée, ce qui contribue à l'augmentation globale des performances du système.

Dans une première forme de réalisation des moyens de détermination des niveaux de bruits de récursivité et/ou d'immobilité avec répartition en classes, ces moyens comprennent :

- un système de comptage, destiné à compter pour chacune des classes un cumul du nombre des grandeurs représentatives de variations d'images compensées en mouvement dans toutes les classes d'ordre inférieur ou égal à l'ordre de cette classe,
- et un comparateur, destiné

  • à comparer à une valeur de consigne, un rapport des cumuls pour respectivement ces classes au cumul pour

4

la classe d'ordre maximal,

- et à produire un ordre minimal de classe pour lequel ce rapport est supérieur ou égal à la valeur de consigne.

De plus, les moyens de détermination des niveaux de bruit de récursivité et/ou d'immobilité sont prévus pour affecter des coefficients de pondération nuls aux classes d'ordre supérieur à cet ordre minimal.

Ainsi, on ne prend en compte les classes que jusqu'à un pourcentage prédéterminé du nombre total de grandeurs calculées, par exemple 10 %. Seules les classes correspondant aux vecteurs de mouvement de normes les plus basses participent donc au calcul des niveaux de bruit. Ceci permet d'obtenir une bonne fiabilité des résultats, car les mouvements faibles sont ceux qui sont réellement représentatifs de la quantité de bruit contenue dans la séquence d'images. Les coefficients de pondération employés dans les classes prises en compte sont alors avantageusement identiques, ce qui revient à faire la moyenne des sommes partielles obtenues pour ces classes.

Dans une seconde forme de réalisation des moyens de détermination des niveaux de bruits de récursivité et/ou d'immobilité avec répartition en classes, ces moyens sont prévus pour affecter aux classes les coefficients de pondération $1/2^{(i-1)}$, i désignant l'ordre de la classe.

Un moyen complémentaire à la pondération des grandeurs, pour déterminer les niveaux de bruit, consiste avantageusement en une limitation des fluctuations temporelles de ces niveaux. On interdit ainsi aux niveaux de bruit de sortir d'une plage de valeurs contenant le niveau de bruit précédemment calculé.

L'invention est également relative à un système de codage comprenant un dispositif de filtrage récursif conforme à l'invention.

Elle s'applique aussi à un procédé de filtrage récursif compensé en mouvement d'images vidéo avant codage. Dans ce procédé :

- on stocke une image d'entrée courante,
- on effectue une estimation de mouvement par blocs de façon à produire des vecteurs de mouvement et des grandeurs représentatives de variations d'images compensées en mouvement, à partir de l'image d'entrée courante et d'au moins une image d'entrée stockée antérieurement,
- on détermine un niveau de bruit de récursivité en fonction d'au moins les grandeurs représentatives de variations d'images compensées en mouvement,
- on calcule une erreur de prédiction, entre l'image d'entrée courante et une image prédite antérieurement par filtrage et compensation de mouvement,
- on calcule un coefficient de récursivité en fonction du niveau de bruit de récursivité et de l'erreur de prédiction,
- on calcule une image compensée en mouvement à partir de l'image d'entrée courante et des vecteurs de mouvement,
- on filtre l'image d'entrée courante, en produisant une pondération de cette image d'entrée courante et d'une image filtrée et compensée en mouvement stockée antérieurement, par le coefficient de récursivité,
- on calcule une image compensée en mouvement à partir de l'image filtrée courante et des vecteurs de mouvement, et
- on stocke cette image filtrée et compensée en mouvement.

Selon l'invention :

- on détermine un niveau de bruit d'immobilité en fonction d'au moins les grandeurs représentatives de variations d'images compensées en mouvement, et
- avant de calculer l'image compensée en mouvement, on traite des zones constituant des partitions des blocs employés pour l'estimation de mouvement :

  - en calculant dans ces zones, des grandeurs représentatives de variations d'images conservées en espace, à partir de l'image d'entrée courante et d'au moins une image d'entrée stockée antérieurement dans les moyens de stockage,
  - et en forçant à zéro des vecteurs de mouvement associés à ces zones lorsque les grandeurs représentatives de variations d'images conservées en espace sont inférieures à un seuil fonction du niveau de bruit d'immobilité.

L'invention sera mieux comprise et illustrée au moyen d'exemples de modes de réalisation et de mise en oeuvre avantageux, nullement limitatifs, en référence aux figures annexées sur lesquelles :

- la figure 1 représente un schéma synoptique d'un dispositif de filtrage récursif conforme à l'invention, et
- la figure 2 montre schématiquement un ensemble de calcul d'un niveau de bruit prédit, incorporé dans le dispositif de la figure 1.

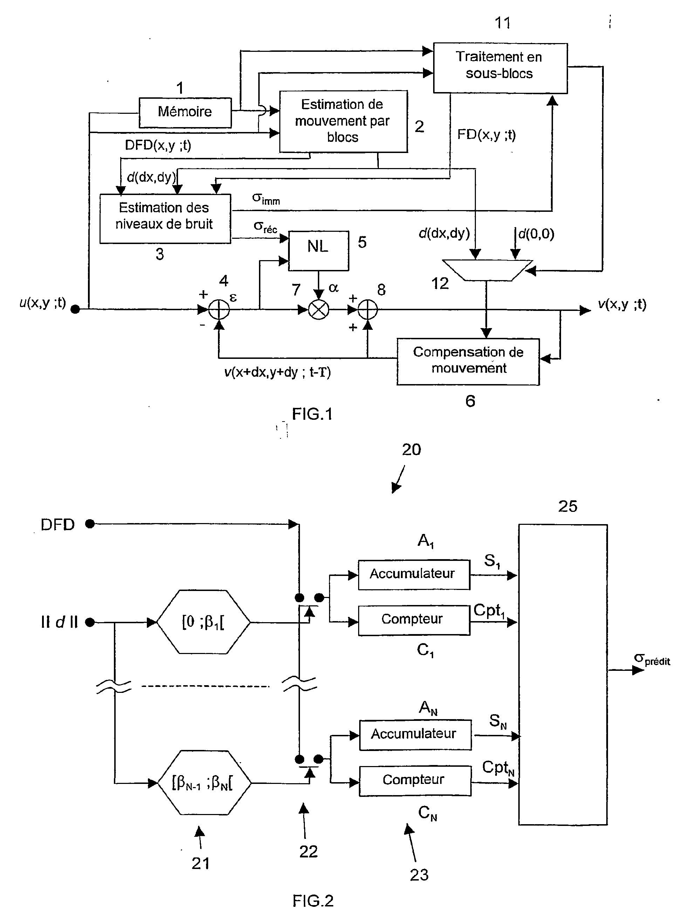

Un dispositif de filtrage récursif compensé en mouvement conforme à l'invention (figure 1) offre une estimation du niveau de bruit robuste et un traitement en sous-blocs performant.

On note :

- x, y et t respectivement l'abscisse, l'ordonnée et le temps,
- $u$(x,y ;t) un signal d'entrée courant,
- $u$(x,y ;t-T) un signal d'entrée retardé d'un délai T (T représente un délai d'une trame vidéo par exemple),
- $d$(dx,dy) un vecteur de déplacement, dx désignant le décalage (offset) de déplacement suivant l'axe des abscisses et dy le décalage de déplacement suivant l'axe des ordonnées,
- $v$(x,y ;t) la sortie du filtre,
- $v$(x+dx,y+dy ;t-T) la sortie du filtre compensée en mouvement retardée d'un délai T, plus communément appelée la prédiction (avec filtrage),
- $\alpha$ un coefficient de récursivité pour l'échantillon courant,
- $\sigma_{réc}$ un niveau de bruit de récursivité estimé pour l'image entière,
- $\sigma_{imm}$ un niveau de bruit d'immobilité estimé pour l'image entière,
- $\varepsilon$ une erreur de prédiction pour l'échantillon courant,
- NL un filtre non linéaire $\alpha = f(\varepsilon, \sigma_{réc})$,
- FD(x,y ;t) : FD(x,y ;t) = $u$(x,y ;t) - $u$(x,y ;t-T) appliquée sur un pixel ou sur un bloc de pixels.
- DFD(x,y ;t) : DFD(x,y ;t) = $u$(x,y ;t) - $u$(x+dx,y+dy ;t-T) appliquée sur un pixel ou sur un bloc de pixels.

Le dispositif de filtrage comprend une mémoire 1, prévue pour stocker une image d'entrée (signal $u$(x,y ;t)) et un estimateur de mouvements par blocs 2, prévu pour produire par blocs des vecteurs de mouvement d et des DFDs, à partir d'une image d'entrée courante (signal $u$(x,y ;t)) et d'une image d'entrée stockée antérieurement (signal $u$(x,y ; t-T)) dans la mémoire 1.

Le dispositif est également pourvu d'une unité 3 de détermination d'un niveau de bruit de récursivité $\sigma_{réc}$ et d'un niveau de bruit d'immobilité $\sigma_{imm}$ en fonction des DFDs et des vecteurs de mouvement $d$ reçus de l'estimateur de mouvement 2. Le niveau de bruit de récursivité $\sigma_{réc}$ est utilisé pour calculer un coefficient de récursivité $\alpha$, tandis que le niveau de bruit d'immobilité $\sigma_{imm}$ sert à améliorer le filtrage en affinant la compensation de mouvement de l'image filtrée précédemment, comme ceci est exposé plus bas.

Il comprend également un premier additionneur 4 capable de soustraire l'image d'entrée courante (signal $u$(x, y ;t)) et une image prédite antérieurement par compensation de mouvement (signal $v$(x,y ;t-T)) à partir d'une image filtrée. L'additionneur 4 produit ainsi une erreur de prédiction $\varepsilon$.

Un module de calcul 5 du coefficient de récursivité $\alpha$ est destiné à recevoir de l'unité 3 le niveau de bruit de récursivité $\sigma_{réc}$ et du module de calcul 4, l'erreur de prédiction $\varepsilon$, et à calculer par une fonction de filtre non linéaire (NL) le coefficient de récursivité $\alpha$. Un multiplieur 7 permet de multiplier l'erreur de prédiction $\varepsilon$ en sortie de l'additionneur 4 par le coefficient de récursivité $\alpha$ reçu du module de calcul 5. De plus, un second additionneur 8 est destiné à recevoir du multiplieur 7 le résultat de ce produit et à l'additionner à l'image prédite antérieurement par compensation de mouvement (signal $v$(x,y ;t-T)) à partir d'une image filtrée. C'est le résultat de cet addition qui constitue l'image filtrée courante, produite en sortie du dispositif (signal $v$(x,y ;t)).

On a donc :

$$v(x, y ;t) = \alpha \ x \ u(x, y ;t) + (1-\alpha) \ x \ v(x+dx,y+dy ;t-T))$$

Le dispositif comprend de plus une unité 6 de calcul et de stockage d'une image compensée en mouvement à partir d'une image de sortie du dispositif (signal $v$(x,y ;t)).et des vecteurs de mouvement $d$ calculés par l'estimateur de mouvement 2. Cependant, un choix entre le vecteur de mouvement $d$ courant et le vecteur nul est effectué au préalable, comme décrit ci-dessous. L'unité 6 a une sortie utilisée, avec un retard (délai T), à la fois en entrées des additionneurs 4 et 8.

Le dispositif de filtrage récursif comprend aussi une unité décisionnelle 11 et une unité de sélection 12.

L'unité décisionnelle 11 a trois entrées recevant respectivement une image d'entrée courante (signal $u$(x,y ; t)), une image d'entrée stockée antérieurement dans la mémoire 1 (signal $u$(x,y ;t-T)) et le niveau de bruit d'immobilité $\sigma_{imm}$. Elle dispose d'une sortie de commande reliée à l'unité de sélection 12. L'unité décisionnelle 11 est prévue pour calculer les FDs sur différentes zones de chaque bloc et pour comparer les FDs au niveau de bruit d'immobilité $\sigma_{imm}$ (ou à un seuil fonction de ce niveau de bruit). Ces zones sont préférentiellement des sous-blocs de taille inférieure à celle des blocs utilisées pour l'estimation de mouvement, par exemple de 4x4 pixels. Selon que les FDs sont inférieures (respectivement supérieures) au niveau de bruit d'immobilité $\sigma_{imm}$, la zone de l'image traitée est décrétée statique (respectivement non statique). L'unité décisionnelle 11 donne alors, par sa sortie de commande, à l'unité de sélection 12 des instructions de mise à zéro des vecteurs de mouvement *d* des zones déclarées statiques. De plus, dans l'exemple représenté, les FDs des zones déclarées statiques sont envoyées à l'unité 3 afin de participer à l'estimation de l'un au moins des niveaux de bruit.

L'unité de sélection 12 comporte une entrée de réception des vecteurs de mouvement *d* en provenance de l'estimateur de mouvement 2, une entrée de mise à zéro des vecteurs de mouvement et une entrée de commande reliée à l'unité décisionnelle 11. Elle effectue un choix entre le vecteur de mouvement *d* courant et le vecteur nul. Ce choix est conditionné par le résultat issu de l'unité décisionnelle 11. Ainsi, en présence de zones statiques, le vecteur de mouvement est forcé à zéro. Dans le cas contraire, le vecteur de mouvement courant *d* est choisi. Les vecteurs de mouvement produits sont envoyés par une sortie à l'unité 6 de compensation de mouvement.

Le traitement des zones statiques a notamment pour effet de remédier à des défauts introduits par l'estimateur de mouvement 2 par blocs en présence de bruit, sur des zones homogènes dans l'espace et temporellement (dispersion du champ de mouvement), ce traitement étant fondé sur l'analyse de la différence entre deux sous-blocs occupant la même position spatiale mais à des instants temporels différents. La comparaison de la FD de chaque zone avec le seuil fonction du niveau de bruit d'immobilité $\sigma_{imm}$ permet de détecter les zones identiques dans l'espace et dans le temps pour une séquence vidéo bruitée ou non bruitée. Ainsi, les phénomènes de grouillement et de papillotement temporels sur des zones en réalité identiques dans l'espace et le temps sont fortement atténués. Outre cet aspect, ce traitement permet également d'effectuer un « détourage » des objets en mouvement: en effet, l'estimation de mouvement par blocs ne fait pas la différence, à l'intérieur même d'un bloc, entre un objet ou une partie de cet objet et le fond de la scène. Le traitement en sous-blocs améliore cet aspect en imposant des vecteurs de déplacement *d* nuls sur des zones identiques dans l'espace et le temps à l'intérieur même de chaque bloc.

Des formes de réalisation particulières de l'unité 3 de détermination des niveaux de bruit vont maintenant être détaillées. Ces réalisations sont particulièrement appropriées au dispositif décrit. Selon ces formes de réalisation, l'unité 3 comprend un ensemble 20 de détermination d'un niveau de bruit prédit $\sigma_{prédit}$ (figure 2), qui est ensuite utilisé pour calculer le niveau de bruit de récursivité $\sigma_{réc}$ et le niveau de bruit d'immobilité $\sigma_{imm}$. Dans une des formes de réalisation, ces deux niveaux de bruit sont identiques et égaux au niveau de bruit prédit $\sigma_{prédit}$. Dans d'autres modes de réalisation, ils diffèrent l'un de l'autre.

L'ensemble 20 a deux entrées recevant respectivement les DFDs et les normes $||d||$ des vecteurs de mouvement *d*, et une sortie donnant le niveau de bruit prédit $\sigma_{prédit}$. Il comprend un premier étage 21 de répartition des normes $||d||$ des vecteurs de mouvement *d* dans des plages $[0 ; \beta_1[ ... [\beta_{N-1} ; \beta_N[$ de valeurs croissantes ($\beta_i$ étant la $i^{ème}$ borne de classification). Un découpage en N plages (de même dynamique ou non) obtenues à partir du module maximal du vecteur de mouvement est pour cela utilisé.

L'ensemble 20 comprend aussi un deuxième étage 22 d'aiguillage des DFDs, selon la plage d'appartenance des normes $||d||$ des vecteurs de mouvement *d* sur les différentes zones considérées. Un troisième étage 23 de comptage et de cumul comprend N couples constitués chacun d'un accumulateur $A_i$ et d'un compteur $C_i$, pour i = 1... N, chacun de ces couples étant associé à l'une des plages de l'étage de répartition 21. Chaque couple définit ainsi une classe d'appartenance des DFDs, correspondant à l'une des plages des normes $||d||$. Les accumulateurs $A_i$ et les compteurs $C_i$ ont respectivement pour fonctions de cumuler les valeurs des DFDs aiguillées vers eux et de les compter. Ils produisent en sorties respectivement des sommes partielles $S_i$ et des nombres $Cpt_i$.

Un module 25 d'exploitation de la classification, en aval du troisième étage 23, permet de produire le niveau de bruit prédit $\sigma_{prédit}$ en fonction des sommes partielles $S_i$ et des nombres $Cpt_i$ de chaque classe.

Selon une première méthode de calcul du niveau de bruit prédit $\sigma_{prédit}$, utilisée dans le module 25, on considère uniquement 10% des DFDs en commençant par la première classe (classe 1) et en cumulant les sommes partielles sur les classes suivantes jusqu'à obtenir un nombre de DFDs cumulées supérieur à 10%. Le niveau de bruit prédit $\sigma_{prédit}$ est alors égal à la moyenne des sommes partielles des classes successives considérées. Il représente le niveau de bruit issu d'au moins 10% des blocs de pixels présentant le plus faible déplacement.

Selon une deuxième méthode, on effectue une moyenne pondérée des sommes partielles. La pondération privilégie alors les classes représentant un module de vecteur de mouvement faible. Les facteurs de pondération ($\phi_i$) sont avantageusement les suivants :

$$\phi i = \frac{1}{2^{(i-1)}}$$

avec i représentant l'indice de la classe et étant compris entre 1 et N (nombre de classes).

Avantageusement, le module 25 n'autorise qu'une certaine plage de fluctuation ($\Delta\sigma_{low}$ et $\Delta\sigma_{high}$) en fonction du niveau de bruit prédit précédemment calculé $\sigma_{préc}$ (MED désignant la valeur médiane entre les trois valeurs en paramètres) :

$$\sigma_{\text{prédit}} = \text{MED}[\sigma_{\text{préc}} - \Delta\sigma_{\text{low}}, \sigma_{\text{prédit}}, \sigma_{\text{préc}} + \Delta\sigma_{\text{hIgh}}]$$

Ainsi, le niveau de bruit prédit $\sigma_{\text{prédit}}$ est issu de la classification des DFDs, effectuée à partir du module des vecteurs de mouvement *d*, en considérant exclusivement ou essentiellement les DFDs relatives à un mouvement faible.

On obtient ainsi un niveau de bruit très fiable. En effet, les DFDs sont très susceptibles d'une part aux erreurs dues à l'estimateur de mouvement et d'autre part aux forts mouvements. Ces derniers introduisent potentiellement des distorsions sur les formes et les objets, qui ont pour conséquences de fausser les DFDs en les augmentant fortement.

Dans une variante de réalisation, le filtrage statique s'effectue sur des pixels des blocs considérés, au lieu de sous-blocs.

## Revendications

**1.** Dispositif de filtrage récursif compensé en mouvement d'images vidéo avant codage, comprenant :

- des moyens de stockage (1) d'au moins une image d'entrée,
- un module d'estimation de mouvement par blocs (2), prévu pour produire par blocs des vecteurs de mouvement (*d*) et des grandeurs représentatives de variations d'images compensées en mouvement (DFD), à partir d'une image d'entrée courante et d'au moins une image d'entrée stockée antérieurement dans lesdits moyens de stockage,
- des moyens de détermination (3) d'un niveau de bruit de récursivité ($\sigma_{\text{réc}}$) en fonction d'au moins lesdites grandeurs représentatives de variations d'images compensées en mouvement (DFD),
- un module de calcul (4) d'une erreur de prédiction ($\varepsilon$), entre une image d'entrée courante et une image prédite antérieurement par filtrage et compensation de mouvement,
- un module de calcul (5) d'un coefficient de récursivité ($\alpha$) en fonction dudit niveau de bruit de récursivité ($\sigma_{\text{réc}}$) et de ladite erreur de prédiction ($\varepsilon$),
- des moyens de calcul (6) d'une image compensée en mouvement à partir d'une image filtrée et desdits vecteurs de mouvement (*d*),
- des moyens de filtrage (7, 8), destinés à produire une pondération de l'image d'entrée courante et d'une image filtrée et compensée en mouvement stockée antérieurement, par le coefficient de récursivité ($\alpha$), et
- des moyens de stockage (6) d'au moins une image filtrée et compensée en mouvement, produite par les moyens de calcul (6) d'images compensées en mouvement,

**caractérisé en ce que** ledit dispositif de filtrage comprend :

- des moyens de détermination (3) d'un niveau de bruit d'immobilité ($\sigma_{\text{imm}}$) en fonction d'au moins lesdites grandeurs représentatives de variations d'images compensées en mouvement (DFD), et
- un ensemble de traitement (11, 12) de zones constituant des partitions desdits blocs employés pour l'estimation de mouvement, comprenant :

• des moyens de calcul (11) dans lesdites zones, de grandeurs représentatives de variations d'images conservées en espace (FD), à partir d'une image d'entrée courante et d'au moins une image d'entrée stockée antérieurement dans lesdits moyens de stockage (1) d'images d'entrées, et
• des moyens de mise à zéro (12) des vecteurs de mouvement (*d*) associés audites zones lorsque lesdites grandeurs représentatives de variations d'images conservées en espace (FD) sont inférieures à un seuil fonction du niveau de bruit d'immobilité ($\sigma_{\text{imm}}$)·

**2.** Dispositif de filtrage récursif selon la revendication 1, **caractérisé en ce que** l'ensemble de traitement de zones (11, 12) utilise des zones constituées de sous-blocs desdits blocs employés pour l'estimation de mouvement.

**3.** Dispositif de filtrage récursif selon l'une des revendications 1 ou 2, **caractérisé en ce que** lesdits moyens de détermination (3) du niveau de bruit de récursivité ($\sigma_{\text{réc}}$) et du niveau de bruit d'immobilité ($\sigma_{\text{imm}}$) sont destinés à produire un niveau de bruit constituant à la fois le niveau de bruit de récursivité et le niveau de bruit d'immobilité.

**4.** Dispositif de filtrage récursif selon l'une des revendications 1 ou 2, **caractérisé en ce que** lesdits moyens de détermination (3) du niveau de bruit de récursivité ($\sigma_{réc}$) sont prévus pour déterminer le niveau de bruit de récursivité à la fois en fonction desdites grandeurs représentatives de variations d'images compensées en mouvement (DFD) et desdites grandeurs représentatives de variations d'images conservées en espace (FD).

5. Dispositif de filtrage récursif selon l'une quelconque des revendications 1 à 4, **caractérisé en ce que** lesdits moyens de détermination (3) des niveaux de bruit de récursivité ($\sigma_{réc}$) et/ou d'immobilité ($\sigma_{imm}$) sont prévus pour déterminer au moins l'un des niveaux de bruit au moins au moyen d'une pondération desdites grandeurs représentatives de variations d'images compensées en mouvement (DFD), en fonction des vecteurs de mouvement (*d*).

6. Dispositif de filtrage récursif selon la revendication 5, **caractérisé en ce que** lesdits moyens de détermination (3) des niveaux de bruit de récursivité ($\sigma_{réc}$) et/ou d'immobilité ($\sigma_{imm}$) sont prévus pour répartir lesdites grandeurs représentatives de variations d'images compensées en mouvement (DFD) dans des classes associées respectivement à des plages ($[0 ; \beta_1[ ... [\beta_{n-1} ; \beta_n[$) délimitées par des normes des vecteurs de mouvement ($\|d\|$) rangées par valeurs croissantes et à des coefficients de pondération correspondants.

7. Dispositif de filtrage récursif selon la revendication 6, **caractérisé en ce que** lesdits moyens de détermination (3) des niveaux de bruit de récursivité ($\sigma_{réc}$) et/ou d'immobilité ($\sigma_{imm}$) comprennent un système de comptage (23), destiné à compter pour chacune desdites classes un cumul du nombre des grandeurs représentatives de variations d'images compensées en mouvement (DFD) dans toutes les classes d'ordre inférieur ou égal à l'ordre de ladite classe, et un comparateur (25) destiné à comparer à une valeur de consigne un rapport desdits cumuls pour respectivement lesdites classes audit cumul pour la classe d'ordre maximal et à produire un ordre minimal de classe pour lequel ledit rapport est supérieur ou égal à la valeur de consigne, et lesdits moyens de détermination (3) des niveaux de bruit de récursivité ($\sigma_{réc}$) et/ou d'immobilité ($\sigma_{imm}$) étant prévus pour affecter des coefficients de pondération nuls aux classes d'ordre supérieur audit ordre minimal.

8. Dispositif de filtrage récursif selon la revendication 6, **caractérisé en ce que** lesdits moyens de détermination (3) des niveaux de bruit de récursivité ($\sigma_{réc}$) et/ou d'immobilité ($\sigma_{imm}$) sont prévus pour affecter audites classes les coefficients de pondération $1/2^{(i-1)}$, i désignant l'ordre de la classe.

9. Système de codage comprenant un dispositif de filtrage récursif conforme à l'une quelconque des revendications 1 à 8.

10. Procédé de filtrage récursif compensé en mouvement d'images vidéo avant codage, dans lequel :

> - on stocke une image d'entrée courante,
> - on effectue une estimation de mouvement par blocs de façon à produire des vecteurs de mouvement (*d*) et des grandeurs représentatives de variations d'images compensées en mouvement (DFD), à partir de ladite image d'entrée courante et d'au moins une image d'entrée stockée antérieurement,
> - on détermine un niveau de bruit de récursivité ($\sigma_{réc}$) en fonction d'au moins lesdites grandeurs représentatives de variations d'images compensées en mouvement (DFD),
> - on calcule une erreur de prédiction ($\varepsilon$), entre l'image d'entrée courante et une image prédite antérieurement par filtrage et compensation de mouvement,
> - on calcule un coefficient de récursivité ($\alpha$) en fonction dudit niveau de bruit de récursivité ($\sigma_{réc}$) et de ladite erreur de prédiction ($\varepsilon$),
> - on filtre l'image d'entrée courante, en produisant une pondération de ladite image d'entrée courante et d'une image filtrée et compensée en mouvement stockée antérieurement, par le coefficient de récursivité ($\alpha$),
> - on calcule une image compensée en mouvement à partir de l'image filtrée courante et desdits vecteurs de mouvement (*d*), et
> - on stocke ladite image filtrée et compensée en mouvement,

> **caractérisé en ce que** :

> - on détermine un niveau de bruit d'immobilité ($\sigma_{imm}$) en fonction d'au moins lesdites grandeurs représentatives de variations d'images compensées en mouvement (DFD), et
> - avant de calculer ladite image compensée en mouvement, on traite des zones constituant des partitions desdits blocs employés pour l'estimation de mouvement :

>> • en calculant dans lesdites zones, des grandeurs représentatives de variations d'images conservées en espace (FD), à partir de l'image d'entrée courante et d'au moins une image d'entrée stockée antérieurement dans lesdits moyens de stockage,
• et en forçant à zéro des vecteurs de mouvement (d) associés audites zones lorsque lesdites grandeurs représentatives de variations d'images conservées en espace (FD) sont inférieures à un seuil fonction du niveau de bruit d'immobilité ($\sigma_{imm}$).

**Claims**

1. Device for the motion-compensated recursive filtering of video images before coding, comprising:

- means of storage (1) of at least one input image,
- a blockwise motion estimation module (2), designed to produce motion vectors (d) blockwise and quantities representative of variations in motion-compensated images (DFD), on the basis of a current input image and of at least one input image stored previously in the said means of storage,
- means (3) for determining a recursivity noise level ($\sigma_{rec}$) as a function of at least the said quantities representative of variations in motion-compensated images (DFD),
- a module (4) for calculating a prediction error ($\varepsilon$), between a current input image and an image predicted previously by filtering and motion compensation,
- a module (5) for calculating a recursivity coefficient ($\alpha$) as a function of the said recursivity noise level ($\sigma_{rec}$) and of the said prediction error ($\varepsilon$),
- means (6) for calculating a motion-compensated image on the basis of a filtered image and of the said motion vectors (d),
- means of filtering (7, 8), intended to produce a weighting of the current input image and of a filtered and motion-compensated image stored previously, by the recursivity coefficient ($\alpha$), and
- means of storage (6) of at least one filtered and motion-compensated image, produced by the means (6) for calculating motion-compensated images,

**characterized in that** the said filtering device comprises:

- means (3) for determining an immobility noise level ($\sigma_{imm}$) as a function of at least the said quantities representative of variations in motion-compensated images (DFD), and
- an assembly (11, 12) for processing zones constituting partitions of the said blocks employed for the motion estimation, comprising:

• means of calculation (11) in the said zones, of quantities representative of variations in images preserved in space (FD), on the basis of a current input image and of at least one input image stored previously in the said means of storage (1) of input images, and
• means of zeroing (12) the motion vectors (d) associated with the said zones when the said quantities representative of variations in images preserved in space (FD) are below a threshold dependent on the immobility noise level ($\sigma_{imm}$).

2. Recursive filtering device according to Claim 1, **characterized in that** the assembly for processing zones (11, 12) uses zones consisting of subblocks of the said blocks employed for the motion estimation.

3. Recursive filtering device according to one of Claims 1 or 2, **characterized in that** the said means (3) for determining the recursivity noise level ($\sigma_{rec}$) and the immobility noise level ($\sigma_{imm}$) are intended to produce a noise level constituting both the recursivity noise level and the immobility noise level.

4. Recursive filtering device according to one of Claims 1 or 2, **characterized in that** the said means (3) for determining the recursivity noise level ($\sigma_{rec}$) are designed to determine the recursivity noise level both as a function of the said quantities representative of variations in motion-compensated images (DFD) and of the said quantities representative of variations in images preserved in space (FD).

5. Recursive filtering device according to any one of Claims 1 to 4, **characterized in that** the said means (3) for determining the recursivity noise level ($\sigma_{rec}$) and/or immobility noise level ($\sigma_{imm}$) are designed to determine at least one of the noise levels at least by means of a weighting of the said quantities representative of variations in motion-compensated images (DFD), as a function of the motion vectors (d).

6. Recursive filtering device according to Claim 5, **characterized in that** the said means (3) for determining the recursivity noise level ($\sigma_{rec}$) and/or immobility noise level ($\sigma_{imm}$) are designed to distribute the said quantities representative of variations in motion-compensated images (DFD) into classes associated respectively with ranges ([0; $\beta_1$[ ... [$\beta_{n-1}$ ; $\beta_n$[) delimited by norms of the motion vectors ($\|d\|$) ranked by increasing values and with corresponding weighting coefficients.

7. Recursive filtering device according to Claim 6, **characterized in that** the said means (3) for determining the recursivity noise level ($\sigma_{rec}$) and/or immobility noise level ($\sigma_{imm}$) comprise a counting system (23), intended to count for each of the said classes an aggregate of the number of the quantities representative of variations in motion-compensated images (DFD) in all the classes of order lower than or equal to the order of the said class, and a comparator (25) intended to compare with a preset value a ratio of the said aggregates for respectively the said classes with the said aggregate for the class of maximum order and to produce a minimum order of class for which the said ratio is greater than or equal to the preset value, the said means (3) for determining the recursivity noise level ($\sigma_{rec}$) and/or immobility noise level ($\sigma_{imm}$) being designed to assign zero weighting coefficients to the classes of order greater than the said minimum order.

8. Recursive filtering device according to Claim 6, **characterized in that** the said means (3) for determining the recursivity noise level ($\sigma_{rec}$) and/or immobility noise level ($\sigma_{imm}$) are designed to assign the weighting coefficients $1/2^{(i-1)}$ to the said classes, i denoting the order of the class.

9. Coding system comprising a recursive filtering device in accordance with any one of Claims 1 to 8.

10. Process for the motion-compensated recursive filtering of video images before coding, in which:

   - a current input image is stored,
   - a blockwise motion estimation is performed in such a way as to produce motion vectors ($d$) and quantities representative of variations in motion-compensated images (DFD), on the basis of the said current input image and of at least one input image stored previously,
   - a recursivity noise level ($\sigma_{rec}$) is determined as a function of at least the said quantities representative of variations in motion-compensated images (DFD),
   - a prediction error ($\varepsilon$) is calculated between the current input image and an image predicted previously by filtering and motion compensation,
   - a recursivity coefficient ($\alpha$) is calculated as a function of the said recursivity noise level ($\sigma_{rec}$) and of the said prediction error ($\varepsilon$),
   - the current input image is filtered, by producing a weighting of the said current input image and of a filtered and motion-compensated image stored previously, by the recursivity coefficient ($\alpha$),
   - a motion-compensated image is calculated on the basis of the current filtered image and of the said motion vectors ($d$), and
   - the said filtered and motion-compensated image is stored,

   **characterized in that**:

   - an immobility noise level ($\sigma_{imm}$) is determined as a function of at least the said quantities representative of variations in motion-compensated images (DFD), and
   - before calculating the said motion-compensated image, zones constituting partitions of the said blocks employed for the motion estimation are processed:

      • by calculating in the said zones, quantities representative of variations in images preserved in space (FD), on the basis of the current input image and of at least one input image stored previously in the said means of storage,
      • and by forcing to zero motion vectors (d) associated with the said zones when the said quantities representative of variations in images preserved in space (FD) are below a threshold dependent on the immobility noise level ($\sigma_{imm}$)

**Patentansprüche**

1. Vorrichtung zur rekursiven bewegungskompensierten Filterung von Videobildern vor der Kodierung mit

- Mitteln (1) zum Speichern von mindestens einem Eingangsbild,
- einem Modul (2) zur blockweisen Bewegungsschätzung, das vorgesehen ist, um aus einem laufenden Eingangsbild und mindestens einem zuvor in den Speichermitteln gespeicherten Eingangsbild Bewegungsvektoren ($d$) und für Variationen von bewegungskompensierten Bildern (DFD) repräsentative Größen blockweise zu erzeugen,
- Mitteln (3) zur Ermittlung eines Rekursivitätsrauschpegels ($\sigma_{réc}$) in Abhängigkeit von mindestens den für Variationen von bewegungskompensierten Bildern (DFD) repräsentativen Größen,
- einem Modul (4) zur Berechnung eines Prädiktionsfehlers ($\varepsilon$) zwischen einem laufenden Eingangsbild und einem zuvor durch Filterung und Bewegungskompensation prädizierten Bild,
- einem Modul (5) zur Berechnung eines Rekursivitätskoeffizienten ($\alpha$) in Abhängigkeit von dem Rekursivitätsrauschpegel ($\sigma_{réc}$) und dem Prädiktionsfehler ($\varepsilon$),
- Mitteln (6) zur Berechnung eines bewegungskompensierten Bilds ausgehend von einem gefilterten Bild und den Bewegungsvektoren ($d$),
- Filterungsmitteln (7, 8), die dazu bestimmt sind, eine Gewichtung des laufenden Eingangsbilds und eines gefilterten und zuvor gespeicherten bewegungskompensierten Bilds mit dem Rekursivitätskoeffizienten ($\alpha$) zu erzeugen und
- Mitteln (6) zum Speichern von mindestens einem gefilterten und bewegungskompensierten Bild, das von den Mitteln (6) zur Berechnung von bewegungskompensierten Bildern erzeugt wird,

**dadurch gekennzeichnet, dass** die Filtervorrichtung Folgendes umfasst:

- Mittel (3) zur Ermittlung eines Immobilitätsrauschpegels ($\sigma_{imm}$) in Abhängigkeit von mindestens den für Variationen von bewegungskompensierten Bildern (DFD) repräsentativen Größen und
- eine Anordnung (11, 12) zur Bearbeitung von Bereichen, die Partitionen der für die Bewegungsschätzung verwendeten Blöcke bilden, mit

    - Mitteln (11), um in den Bereichen für Variationen von räumlich konservierten Bildern (FD) repräsentative Größen ausgehend von einem laufenden Eingangsbild und von mindestens einem zuvor in den Eingangsbilder-Speichermitteln (1) gespeicherten Eingangsbild zu berechnen und
    - Mitteln (12), um den Bereichen zugeordnete Bewegungsvektoren ($d$) auf Null zu setzen, wenn die für Variationen von räumlich konservierten Bildern (FD) repräsentativen Größen unter einer von dem Immobilitätsrauschpegel ($\sigma_{imm}$) abhängenden Schwelle liegen.

2. Vorrichtung zur rekursiven Filterung nach Anspruch 1, **dadurch gekennzeichnet, dass** die Anordnung (11, 12) zur Bearbeitung von Bereichen Bereiche benutzt, die durch Unterblöcke der für die Bewegungsschätzung verwendeten Blöcke gebildet sind.

3. Vorrichtung zur rekursiven Filterung nach einem der Ansprüche 1 oder 2, **dadurch gekennzeichnet, dass** die Mittel (3) zur Ermittlung des Rekursivitätsrauschpegels ($\sigma_{réc}$) und des Immobilitätsrauschpegels ($\sigma_{imm}$) dazu bestimmt sind, einen Rauschpegel zu erzeugen, der den Rekursivitätsrauschpegel und den Immobilitätsrauschpegel zugleich bildet.

4. Vorrichtung zur rekursiven Filterung nach einem der Ansprüche 1 oder 2, **dadurch gekennzeichnet, dass** die Mittel (3) zur Ermittlung des Rekursivitätsrauschpegels ($\sigma_{réc}$) vorgesehen sind, um den Rekursivitätsrauschpegel in Abhängigkeit von den für Variationen von bewegungskompensierten Bildern (DFD) repräsentativen Größen und von den für Variationen von räumlich konservierten Bildern (FD) repräsentativen Größen zugleich zu ermitteln.

5. Vorrichtung zur rekursiven Filterung nach einem der Ansprüche 1 bis 4, **dadurch gekennzeichnet, dass** die Mittel (3) zur Ermittlung des Rekursivitätsrauschpegels ($\sigma_{réc}$) und/oder des Immobilitätsrauschpegels ($\sigma_{imm}$) vorgesehen sind, um mindestens einen der Rauschpegel mindestens mit Hilfe einer Gewichtung der für Variationen von bewegungskompensierten Bildern (DFD) repräsentativen Größen in Abhängigkeit von den Bewegungsvektoren ($d$) zu ermitteln.

6. Vorrichtung zur rekursiven Filterung nach Anspruch 5, **dadurch gekennzeichnet, dass** die Mittel (3) zur Ermittlung des Rekursivitätsrauschpegels ($\sigma_{réc}$) und/oder des Immobilitätsrauschpegels ($\sigma_{imm}$) vorgesehen sind, um die für Variationen von bewegungskompensierten Bildern (DFD) repräsentativen Größen in Klassen einzuteilen, die jeweils Bereichen ($[0 ; \beta1[ \ldots [\beta n-1 ; \beta n[$), die von Normen der Bewegungsvektoren ($\|d\|$) abgegrenzt sind, die mit aufsteigenden Werten sortiert sind, und entsprechenden Gewichtungskoeffizienten zugeordnet sind.

**7.** Vorrichtung zur rekursiven Filterung nach Anspruch 5, **dadurch gekennzeichnet, dass** die Mittel (3) zur Ermittlung des Rekursivitätsrauschpegels ($\sigma_{réc}$) und/oder des Immobilitätsrauschpegels ($\sigma_{imm}$) ein Zählungssystem (23) umfassen, das dazu bestimmt ist, für jede der Klassen eine kumulative Summe der Anzahl der für Variationen von bewegungskompensierten Bildern (DFD) repräsentativen Größen in allen Klassen zu zählen, deren Ordnung niedriger als oder gleich der Ordnung der Klasse ist, und einen Komparator (25), der dazu bestimmt ist, ein Verhältnis von den kumulativen Summen jeweils für die Klassen zu der kumulativen Summe für die Klasse maximaler Ordnung mit einem Sollwert zu vergleichen und eine minimale Klassenordnung zu erzeugen, für die das Verhältnis größer als oder gleich dem Sollwert ist, und wobei die Mittel (3) zur Ermittlung des Rekursivitätsrauschpegels ($\sigma_{réc}$) und/oder des Immobilitätsrauschpegels ($\sigma_{imm}$) vorgesehen sind, um den Klassen, deren Ordnung höher ist als die minimale Ordnung, Gewichtungskoeffizienten zuzuordnen, die gleich Null sind.

**8.** Vorrichtung zur rekursiven Filterung nach Anspruch 6, **dadurch gekennzeichnet, dass** die Mittel (3) zur Ermittlung des Rekursivitätsrauschpegels ($\sigma_{réc}$) und/oder des Immobilitätsrauschpegels ($\sigma_{imm}$) vorgesehen sind, um den Klassen die Gewichtungskoeffizienten $1/2^{(i-1)}$ zuzuordnen, wobei i die Ordnung der Klasse bezeichnet.

**9.** Kodierungssystem mit einer Vorrichtung zur rekursiven Filterung nach einem der Ansprüche 1 bis 8.

**10.** Verfahren zur rekursiven bewegungskompensierten Filterung von Videobildern vor der Kodierung, bei dem

- ein laufendes Eingangsbild gespeichert wird,
- eine Bewegungsschätzung blockweise derart durchgeführt wird, dass aus dem laufenden Eingangsbild und mindestens einem zuvor gespeicherten Eingangsbild Bewegungsvektoren ($d$) und für Variationen von bewegungskompensierten Bildern (DFD) repräsentative Größen erzeugt werden,
- ein Rekursivitätsrauschpegel ($\sigma_{réc}$) in Abhängigkeit von mindestens den für Variationen von bewegungskompensierten Bildern (DFD) repräsentativen Größen ermittelt wird,
- ein Prädiktionsfehler ($\varepsilon$) zwischen dem laufenden Eingangsbild und einem zuvor durch Filterung und Bewegungskompensation prädizierten Bild berechnet wird,
- ein Rekursivitätskoeffizient ($\alpha$) in Abhängigkeit von dem Rekursivitätsrauschpegel ($\sigma_{réc}$) und dem Prädiktionsfehler ($\varepsilon$) berechnet wird,
- das laufende Eingangsbild gefiltert wird, indem eine Gewichtung des laufenden Eingangsbilds und eines gefilterten und zuvor gespeicherten bewegungskompensierten Bilds mit dem Rekursivitätskoeffizienten ($\alpha$) erzeugt wird,
- ein bewegungskompensiertes Bild ausgehend von dem laufenden gefilterten Bild und den Bewegungsvektoren ($d$) berechnet wird und
- das gefilterte und bewegungskompensierte Bild gespeichert wird,

**dadurch gekennzeichnet, dass**

- ein Immobilitätsrauschpegel ($\sigma_{imm}$) in Abhängigkeit von mindestens den für Variationen von bewegungskompensierten Bildern (DFD) repräsentativen Größen ermittelt wird und
- vor der Berechnung des bewegungskompensierten Bilds Bereiche, die Partitionen der für die Bewegungsschätzung verwendeten Blöcke bilden, bearbeitet werden, indem

- in den Bereichen für Variationen von räumlich konservierten Bildern (FD) repräsentative Größen ausgehend von dem laufenden Eingangsbild und von mindestens einem zuvor in den Speichermitteln gespeicherten Eingangsbild berechnet werden und
- den Bereichen zugeordnete Bewegungsvektoren ($d$) auf Null gesetzt werden, wenn die für Variationen von räumlich konservierten Bildern (FD) repräsentativen Größen unter einer von dem Immobilitätsrauschpegels ($\sigma_{imm}$) abhängenden Schwelle liegen.

FIG.1

FIG.2